# EUROPÄISCHE PATENTANMELDUNG

(11) **EP 3 435 038 A1**
(43) Veröffentlichungstag der Anmeldung: **30.01.2019**
(21) Anmeldenummer: 18000568.8
(22) Anmeldetag: 29.06.2018
(51) Int. Cl.: G01D 4/00

(54) **ANORDNUNG UMFASSEND EINEN VERBRAUCHSZÄHLER SOWIE EINEN EXTERNEN EMPFÄNGER UND VERFAHREN ZUM AUSLESEN EINES VERBRAUCHSZÄHLERS**

(30) Priorität: 27.07.2017 DE 102017007165
(71) Anmelder: Diehl Metering GmbH, 91522 Ansbach (DE); Diehl Metering S.A.S., 68300 Saint-Louis (FR)
(72) Erfinder: Wehrhausen, Dominik, DE - 76227 Karlsruhe - Durlach (DE); Reuter, Christof, DE - 76137 Karlsruhe (DE); Biergans, Lukas, DE - 76131 Karlsruhe (DE); Migendt, Arnold, DE - 75223 Niefern (DE); Kuessner, Jan-Hendrik, 37075 Göttingen (DE); Valiallah, Serajehhosseini, DE - 76131 Karlsruhe (DE)
(74) Vertreter: Diehl Patentabteilung

(57) **Zusammenfassung**

Die Erfindung betrifft eine Anordnung (1), welche mindestens einen Verbrauchszähler (10), insbesondere einen Durchflusszähler für flüssiges oder gasförmiges Medium sowie einen externen Empfänger umfasst, wobei der Verbrauchszähler (10) ein Gehäuse, einen Messwertgeber (11), eine Recheneinheit (13) sowie eine Kommunikationseinrichtung (14) zur Übertragung von Zählerdaten an den externen Empfänger umfasst, und die Anordnung (1) mindestens eine Funktionseinheit umfasst, die am externen Empfänger angeordnet ist und es sich bei der Funktionseinheit um eine durch den Verbrauchszähler (10) gemeinsam nutzbare Funktionseinheit handelt, derart, dass die Funktionalität des Verbrauchszählers (10) komplettiert ist. Ferner betrifft die Erfindung ein Verfahren zum Auslesen mindestens eines Verbrauchszählers (10), vorzugsweise einer Mehrzahl von Verbrauchszählern (10), unter Verwendung einer Anordnung (1), wobei die Zählerdaten vom externen Empfänger zur Weiterübertragung an einen Empfänger, vorzugsweise gebündelt, bereitgehalten werden.

## Beschreibung

Die vorliegende Erfindung betrifft eine Anordnung, umfassend einen Verbrauchszähler sowie einen externen Empfänger gemäß dem Oberbegriff des Anspruchs 1. Ferner betrifft die vorliegende Erfindung ein Verfahren zum Auslesen mindestens eines Verbrauchszählers gemäß dem Oberbegriff des Anspruchs 14.

### Technologischer Hintergrund

Gattungsgemäße Verbrauchszähler sind so konstruiert, dass sie alle für ihren Betrieb notwendigen Komponenten aufweisen. So sind auch Ableseeinheiten in die Verbrauchszähler verbaut, um den Zählerstand am Verbrauchszähler ablesen zu können. Hierfür sind mechanische oder digitale Ausführungen der Ableseeinheit vorgesehen. Zur Erfassung des Zählerstandes wird bei herkömmlichen Verbrauchszählern der Zählerstand an jedem Verbrauchszähler von einer Person abgelesen und anschließend notiert oder manuell in ein Datenerfassungsgerät eingegeben. Bei elektronischen Verbrauchszählern besteht teilweise die Möglichkeit der optischen Datenübertragung mittels Infrarot-Schnittstelle. Des Weiteren sind Verbrauchszähler bekannt, welche den Zählerstand über Funk, beispielsweise über ein Mobilfunksystem, übertragen.

Die Datenübertragung von Messeinheiten, wie z. B. Sensoren, Verbrauchsmessern bzw. Verbrauchszählern oder Komponenten von Smart-Home-Steuerungen, gewinnt im täglichen Gebrauch zunehmend an Bedeutung. Ein wichtiger Anwendungsbereich von Messeinheiten ist der Einsatz von intelligenten Verbrauchszählern, sogenannten Smart Metern. Diese sind in der Regel in ein Versorgungsnetz eingebundene Verbrauchszähler, z. B. für Energie, Strom, Gas oder Wasser, die dem jeweiligen Anschlussbenutzer den tatsächlichen Verbrauch anzeigen und ein Kommunikationsnetz zur Übertragung der Verbrauchsdaten an den Versorger nutzen. Intelligente Verbrauchszähler haben den Vorteil, dass manuelle Ablesungen der Zählerstände entfallen und seitens des Versorgers kurzfristigere Rechnungsstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Für die Übertragung der Verbrauchsdaten an den Versorger bietet sich die Auslesung per sogenanntem "fixed network" an. Diese Art der Funkfernauslesung ist bei einer großen Anzahl an Verbrauchszählern in den meisten Fällen die wirtschaftlichste. Im entsprechenden Gebiet werden hierfür eine oder mehrere Empfangsantennen fest installiert. Die Daten der Verbrauchszähler werden per Funk über Entfernungen von bis zu wenigen Kilometern an diese Empfangsantennen übertragen. Pro Empfangsantenne können allerdings nur Daten von einer begrenzten Anzahl an Sendern empfangen werden.

### Nächstliegender Stand der Technik

Die DE 101 33 366 C2 beschreibt ein Verfahren zur Erfassung von Zählerstandsdaten von mehreren, an verschiedenen Orten vorgesehenen Verbrauchszählern, während einer Datenerfassungstour. Die Zähler selbst weisen Anzeigen auf, um die Zählerstandsdaten anzuzeigen, so dass auch ein visuelles Ablesen der Zählerstandsdaten an den Zählern selbst vorgesehen ist.

### Aufgabe der vorliegenden Erfindung

Die Aufgabe der vorliegenden Erfindung besteht darin, eine neuartige Anordnung sowie ein neuartiges Verfahren zur Verfügung zu stellen, durch welche eine verbesserte Wirtschaftlichkeit und Benutzerfreundlichkeit in Einfach- und Mehrfachinstallationssituationen von Verbrauchszählern ermöglicht werden.

### Lösung der Aufgabe

Die vorstehende Aufgabe wird durch die gesamte Lehre des Anspruchs 1 sowie durch ein Verfahren gemäß Anspruch 14 gelöst. Zweckmäßige Ausgestaltungen der Erfindung sind in den Unteransprüchen beansprucht.

Erfindungsgemäß ist eine Anordnung vorgesehen, welche mindestens einen Verbrauchszähler sowie einen externen Empfänger umfasst. Der Verbrauchszähler kann insbesondere ein Durchflusszähler für flüssiges oder gasförmiges Medium, beispielsweise ein Wasserzähler, sein. Weiter umfasst der Verbrauchszähler ein Gehäuse, einen Messwertgeber, eine Recheneinheit sowie eine Kommunikationseinrichtung zur Übertragung von Zählerdaten an einen externen Empfänger. Darüber hinaus umfasst die Anordnung mindestens eine Funktionseinheit, welche am externen Empfänger angeordnet ist. Bei der Funktionseinheit handelt es sich um eine durch den Verbrauchszähler gemeinsam mit dem externen Empfänger nutzbare Funktionseinheit, die derart gestaltet ist, dass sie die Funktionalität des Verbrauchszählers komplettiert. Dadurch bietet die Anordnung die Möglichkeit Komponenten, welche nicht exakt am Verbrauchzähler benötigt werden, insbesondere nicht an der jeweiligen Messstrecke notwendig sind, auszulagern. In Einbausituationen mit geringem Platzangebot für einen Verbrauchszähler, können somit durch die Auslagerung von Komponenten vom Verbrauchszähler an den externen Empfänger der Platzbedarf des Verbrauchszählers minimiert werden. Die Funktionalität des Verbrauchszählers bleibt dabei allerdings im kompletten Umfang erhalten. Zudem können durch die Auslagerung von Komponenten die Herstellungs- und Betriebskosten der Verbrauchszähler in erheblichem Maße reduziert werden. Schließlich wird auch der Energieverbrauch reduziert und damit die Lebensdauer der Zähler-eigenen, autarken Energiequellen verlängert.

Vorzugsweise kann es sich bei der Funktionseinheit am externen Empfänger um ein Display handeln. Insbesondere kann dieses Display zum Ablesen des Zählerstandes mindestens eines Verbrauchszählers in der Anordnung verwendet werden. Somit wird keine stationär verbaute Ablese- bzw. Anzeigeeinrichtung mehr am abzulesenden Verbrauchszähler benötigt. Dies verringert zum einen die Produktionskosten der Verbrauchszähler und zum anderen sinkt der Platzbedarf eines Verbrauchszählers am Installationsort. Ferner besteht dadurch die Möglichkeit den Verbrauchszähler von einem Ort aus abzulesen, welcher sich vom Installationsort des Verbrauchszählers selbst unterscheidet.

Zweckmäßigerweise kann es sich bei der Funktionseinheit am externen Empfänger um einen Speicher handeln, in welchem beispielsweise die Verbrauchsdaten speicherbar sind. Dadurch besteht die Möglichkeit, am Verbrauchszähler selbst auf einen Speicher zu verzichten.

Die gemeinsam nutzbare Funktionseinheit kann sich zweckmäßigerweise ausschließlich am externen Empfänger befinden, so dass die ausgelagerte Funktionseinheit nicht mehr am Verbrauchszähler selbst vorhanden ist. Somit könnte sich beispielsweise eine Einrichtung zum Ablesen des Zählerstandes des Verbrauchszählers ausschließlich am externen Empfänger befinden.

Vorzugsweise kann der externe Empfänger ein Gehäuse, eine Recheneinheit sowie eine Kommunikationseinrichtung umfassen. Zweckmäßigerweise unterscheiden sich dieses Gehäuse, diese Recheneinheit sowie diese Kommunikationseinheit des externen Empfängers von dem Gehäuse, der Recheneinheit und der Kommunikationseinheit des Verbrauchszählers. Bei dem Verbrauchszähler und dem externen Empfänger kann es sich somit um zwei baulich getrennte Einheiten handeln.

Zweckmäßigerweise kann die Kommunikationseinrichtung des Verbrauchszählers per Kabel und/oder per Funk und/oder optisch und/oder akustisch mit einem externen Empfänger in Verbindung stehen. Die entsprechende Kommunikationseinrichtung kann somit den jeweiligen Installationsbedingungen angepasst werden. Bei einer Funkverbindung ist beispielsweise eine Verbindung über Bluetooth Low Energy (BLE) möglich. BLE ist eine Funktechnik, welche eine Vernetzung von Geräten in einer Entfernung von bis zu 10 Metern ermöglicht und sich durch einen deutlich geringeren Stromverbrauch beispielsweise im Vergleich zum Industriestandard Bluetooth auszeichnet. Der geringere Stromverbrauch hat den Vorteil, dass sich die Lebensdauer der Batterie des Verbrauchszählers signifikant erhöht.

Vorzugsweise kann die Kommunikationseinrichtung über die Nahfeldkommunikation-Technik verfügen. Durch die Nahfeldkommunikation-Technik ist es möglich unterschiedliche Geräte als externe Empfänger einzusetzen, welche auch über eine entsprechende Nahfeldkommunikation-Technik verfügen. Zweckmäßigerweise kann die Kommunikationseinrichtung einen Chip zur Nahfeldkommunikation (NFC-Chip) umfassen. Die Nahfeldkommunikation-Technik ermöglicht eine verlängerte Batterielebensdauer aufgrund des geringen Stromverbrauchs.

Die maximale Reichweite der Nahfeldkommunikation-Technik kann zweckmäßigerweise bis zu 10 Meter betragen, vorzugsweise bis zu 5 Meter, vorzugsweise bis zu 1 Meter, vorzugsweise bis zu 50 Zentimeter.

Als externer Empfänger kann vorzugweise ein Smartphone und/oder ein Tablet-PC verwendet werden. Da Smartphones und Tablet-PCs eine große Bekanntheit und Verbreitung innerhalb der Bevölkerung aufweisen, verfügt ein Großteil der Privatpersonen heutzutage über ein Smartphone und/oder einen Tablet-PC. Dadurch können bereits beim Endkunden vorhandene Geräte als externer Empfänger Verwendung finden. Somit besteht beispielsweise die Möglichkeit das Display eines Smartphones und/oder Tablet-PCs als gemeinsam nutzbare Funktionseinheit für die Verbrauchszähler zu verwenden. Bei herkömmlichen mechanischen Anzeigen am Verbrauchszähler kann sich die Ablesung der Nachkommastellen, welche häufig durch separate Rädchen dargestellt werden und mit entsprechenden Faktoren multipliziert werden müssen, für den privaten Endkunden als schwierig herausstellen. Ebenso kann eine schlechte Menüführung bei elektronischen Displays herkömmlicher Verbrauchszähler mit begrenzter Display-Größe und -Auflösung die Ablesung für den Endkunden erschweren. Durch die Verwendung eines Smartphones und/oder Tablet-PCs kann der Endkunde ein technisches Gerät zum Ablesen verwenden, mit welchem er bereits vertraut ist. Hierfür kann beispielsweise eine App genutzt werden, welche auf dem Smartphone und/oder Tablet-PC installiert wird. Die Bedienerfreundlichkeit des Verbrauchszählers wird dadurch für den Endkunden verbessert und die Kosten werden gesenkt.

Gemäß einer weiteren Ausgestaltung der Erfindung kann die Kommunikationseinrichtung des Verbrauchszählers das Auflegen eines externen Empfängers auf den Verbrauchszähler detektieren. Zweckmäßigerweise besteht bei einem aufliegenden externen Empfänger die Möglichkeit, dass Daten übermittelt werden. Bei den Daten kann es sich beispielsweise um den aktuellen Zählerstand handeln. Da Verbrauchszähler oftmals in Kellerräumen verbaut sind, können die vorherrschenden Lichtverhältnisse ungeeignet zum Ablesen des Zählerstandes sein. Durch das Detektieren eines aufliegenden externen Empfängers und die Möglichkeit Daten zu übermitteln kann beispielsweise ein Smartphone einfach für wenige Sekunden an den Verbrauchszähler gehalten werden und im Anschluss der Zählerstand bequem vom Display des Smartphones abgelesen werden.

Erfindungsgemäß kann es ferner vorgesehen sein, dass die Anordnung eine Mehrzahl von Verbrauchszählern umfasst. Zweckmäßigerweise kann ein externer Empfänger mit einer Mehrzahl von Verbrauchszählern gleichzeitig und unabhängig voneinander in Verbindung stehen. Dies hat den Vorteil, dass die ausgelagerten gemeinsam nutzbaren Funktionseinheiten von mehreren Verbrauchszählern parallel und gleichzeitig verwendet werden können. So kann beispielsweise ein Display an einem externen Empfänger für eine Mehrzahl von Verbrauchszählern als Ablese- bzw. Anzeigeeinrichtung fungieren. Ferner ist es durch die Auslagerung des Speichers an den externen Empfänger beispielsweise möglich die Zählerstände einer Mehrzahl von Verbrauchszähler an einem zentralen Ort zu speichern und zu hinterlegen.

Es besteht ferner die Möglichkeit weitere Komponenten des Verbrauchszählers als Funktionseinheit am externen Empfänger auszulagern, welche für den Betrieb des Verbrauchszählers nicht notwendigerweise am Verbrauchszähler selbst vorhanden sein müssen und/oder welche die Funktion für mehrere Verbrauchszähler gleichzeitig übernehmen können. Für die Auslagerung bieten sich beispielsweise weitere Elektronikkomponenten der Verbrauchszähler an. Dies kann bei Zählermehrfachinstallationssituationen vorteilhafterweise die Gesamtkomponentenzahl und damit die Kosten senken.

Um bei einer Mehrzahl von Verbrauchszähler in der Anordnung einen einzelnen Verbrauchszähler zu adressieren, können die Verbrauchszähler zweckmäßigerweise eine eigene individuelle ID haben. Die individuelle ID kann vorzugsweise im externen Empfänger hinterlegt sein, um beispielsweise eine Zuordnung von Zählerständen zum entsprechenden Verbrauchszähler zu gewährleisten.

Ferner kann die Anordnung vorzugsweise eine Mehrzahl von externen Empfängern umfassen, so dass die Kommunikationseinrichtung vorzugsweise mit einer Mehrzahl von externen Empfängern gleichzeitig und unabhängig voneinander in Verbindung stehen kann. Dies hat zum Vorteil, dass bei Auslagerung verschiedener Funktionseinheiten aus dem Verbrauchszähler diese nicht notwendigerweise am selben externen Empfänger angeordnet sein müssen. So kann beispielsweise ein erster externer Empfänger einen Speicher als gemeinsam nutzbare Funktionseinheit aufweisen und ein zweiter externer Empfänger ein Display.

Es besteht ferner auch keine Einschränkung bezüglich der Art oder des Modells der verwendeten externen Empfänger, so dass Verbindungen auch an sich unterscheidende externe Empfänger gleichzeitig und unabhängig voneinander bestehen können. Beispielsweise könnte der Zählerstand gleichzeitig an ein Smartphone und an einen Tablet-PC übermittelt werden.

Zweckmäßigerweise kann es sich bei dem externen Empfänger um ein Mastermodul für eine Installationsanordnung einer Mehrzahl von Verbrauchszählern handeln. In einer Mehrfachinstallationssituation von Verbrauchszählern kann das Mastermodul beispielsweise die Verbrauchsdaten mehrerer Verbrauchszähler auslesen und speichern. Somit können z. B. alle Verbrauchsdaten der Verbrauchszähler, die in einer Mehrfachinstallation anfallen, an einem Ort, dem Mastermodul, abgelesen werden.

Eine Weiterbildung der Erfindung kann vorsehen, dass die Zählerdaten, vorzugsweise die Zählerdaten einer Mehrzahl von Verbrauchszählern, durch den externen Empfänger gebündelt zur Übertragung bereitgehalten werden.

Nebengeordnet beansprucht die vorliegende Erfindung auch ein Verfahren zum Auslesen mindestens eines Verbrauchszählers, vorzugsweise einer Mehrzahl von Verbrauchszählern, unter Verwendung einer Ausgestaltung der Erfindung, wobei die Zählerdaten vom externen Empfänger zur Weiterübertragung an einen Empfänger, vorzugsweise gebündelt, bereitgehalten werden. Vorzugsweise kann es sich bei dem Empfänger um eine Empfangsantenne eines "fixed network" handeln.

Falls die Auslesung über ein stationär installiertes "fixed network" stattfindet, könnte der externe Empfänger ein Sendemodul als Funktionseinheit umfassen, welches die vom Verbrauchszähler stammenden Verbrauchsdaten an den Datensammler über das "fixed network" sendet. Der externe Empfänger kann die Verbrauchsdaten von verschiedenen Verbrauchszählern bündeln, so dass die Verbrauchsdaten der externen Empfänger auch bei einer begrenzten Anzahl von Sendern pro Empfangsantenne empfangen werden können. Somit können sich in Zählermehrfachinstallationssituationen mehrere Verbrauchszähler ein Sendemodul teilen. Da folglich mehrere Verbrauchszähler über ein Sendemodul fernausgelesen werden können, steigt die Anzahl der pro Empfangsantenne auslesbaren Verbrauchszähler. Dies senkt in vielen Fällen die Anzahl der zu installierenden Empfangsantennen und somit Aufwand und Kosten.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte Darstellung eines Verbrauchszählers und eines Smartphones als externen Empfänger;
- Fig. 2: eine vereinfachte schematische Darstellung eines Verbrauchszählers als Blockschaltbild und eines Smartphones als externen Empfänger;
- Fig. 3A-B: an Verbrauchszählern verbaute Funktionseinheiten sowie die Auslagerung der Funktionseinheit als externen Empfänger;
- Fig. 4: eine schematische Darstellung einer Mehrfachinstallationssituation von Verbrauchszählern, welche mit einem externen Empfänger kommunizieren;
- Fig. 5: eine schematische Darstellung einer Mehrzahl von Verbrauchszählern, welche mit einer Mehrzahl von externen Empfängern kommuniziert;
- Fig. 6: eine stark vereinfachte schematische Darstellung der Bündelung und Übertragung von Zählerdaten in einem "fixed network".

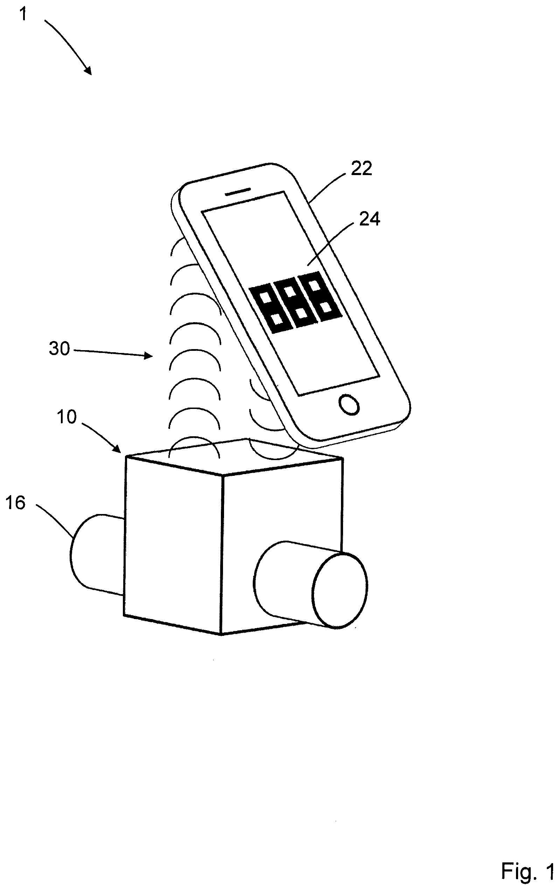

Die Erfindung wird unter Bezugnahme von Fig. 1 näher erläutert. Fig. 1 zeigt eine Ausgestaltung der erfindungsgemäßen Anordnung 1, bestehend aus einem Verbrauchszähler 10 sowie einem Smartphone 22 als externen Empfänger. Der Verbrauchszähler 10 ist mit den Anschlüssen 16 in einem (nicht dargestelltem) Versorgungsnetz, beispielsweise einem Wasserversorgungsnetz, installiert. Über eine Funkverbindung 30 steht der Verbrauchzähler mit dem Smartphone 22 in Verbindung. Somit wird das Display 24 des Smartphones 22 als Funktionseinheit am externen Empfänger verwendet und fungiert hier als Ablese- bzw. Anzeigeeinrichtung für den Verbrauchszähler 10.

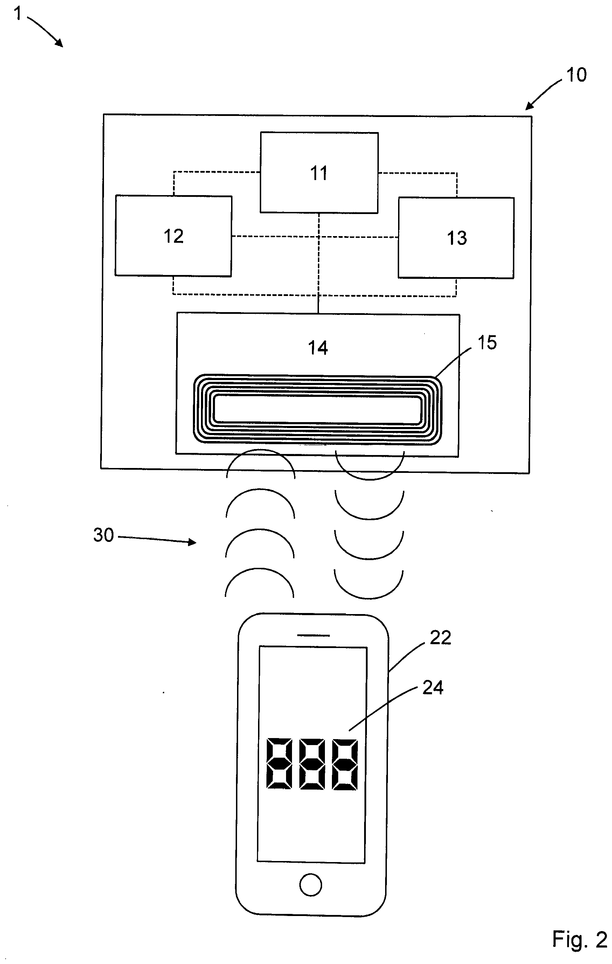

In Fig. 2 ist eine mögliche Ausgestaltung des Verbrauchszählers 10 als Blockschaltbild innerhalb der Anordnung 1 gezeigt. Der Verbrauchszähler 10 umfasst einen Messwertgeber 11, einen Speicher 12, eine Recheneinheit 13 sowie eine Kommunikationseinrichtung 14. Die Kommunikationseinrichtung 14 verfügt über einen Funk-Chip 15, z. B. einem Nahfeldkommunikationschip (z. B. NFC-Chip). Die einzelnen Komponenten des Verbrauchszählers 10 stehen dabei miteinander in Verbindung. Des Weiteren besteht eine Funkverbindung 30 zwischen dem Funk-Chip 15 und dem Smartphone 22. So kann in der Anordnung 1 beispielsweise der Zählerstand vom Verbrauchszähler 10 per Funk 30 an das Smartphone 22 übertragen werden. Das Display 24 des Smartphones 22 dient damit als Ablese- bzw. Anzeigeeinrichtung des Zählerstandes des Verbrauchszählers 10. Der Verbrauchszähler 10 verfügt selbst über keine stationär verbaute Ablese- bzw. Anzeigeeinrichtung. Somit lässt sich der Zählerstand des Verbrauchszählers 10 ausschließlich am externen Empfänger ablesen.

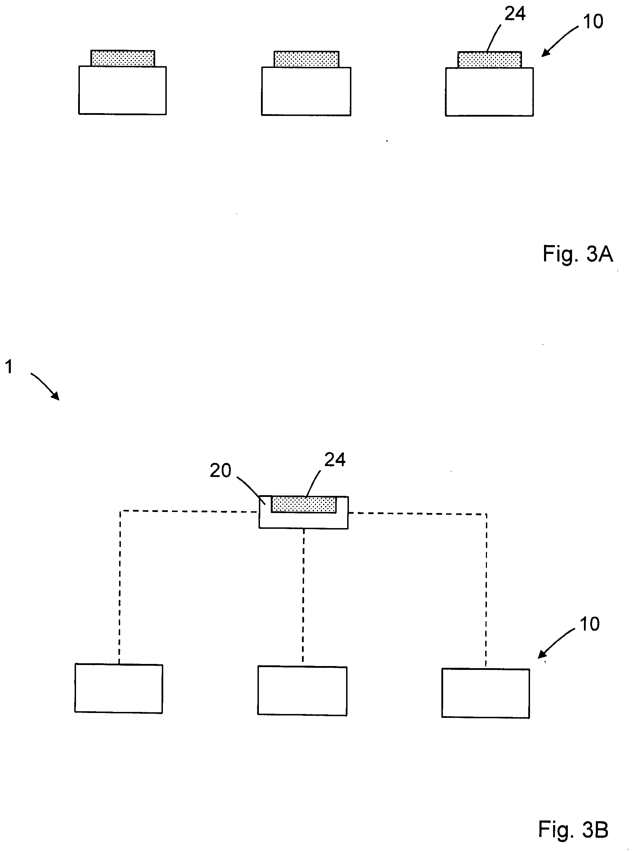

Fig. 3B zeigt die Auslagerung einer gemeinsam nutzbaren Funktionseinheit für die Verbrauchszähler 10 an einen externen Empfänger. In Fig. 3A sind drei Verbrauchszähler 10 gezeigt, welche jeweils ein Display 24 aufweisen. Damit entsprechen sie gattungsgemäßen Verbrauchszählern 10, wie aus dem Stand der Technik bekannt, die alle zum Betrieb benötigten Funktionseinheiten stationär verbaut aufweisen. Dagegen ist in Fig. 3B eine Ausgestaltung der Erfindung gezeigt. Es werden ebenfalls drei Verbrauchszähler 10 betrieben, welche allerdings nicht mehr alle Funktionseinheiten an den Verbrauchszählern 10 selbst aufweisen. So ist das Display 24 als gemeinsam nutzbare Funktionseinheit an einen externen Empfänger ausgelagert worden. Der externe Empfänger ist hier als Anzeigevorrichtung 20 verwirklicht. Die Verbrauchszähler 10 stehen mit der Anzeigevorrichtung 20 in Verbindung, beispielsweise per Funk.

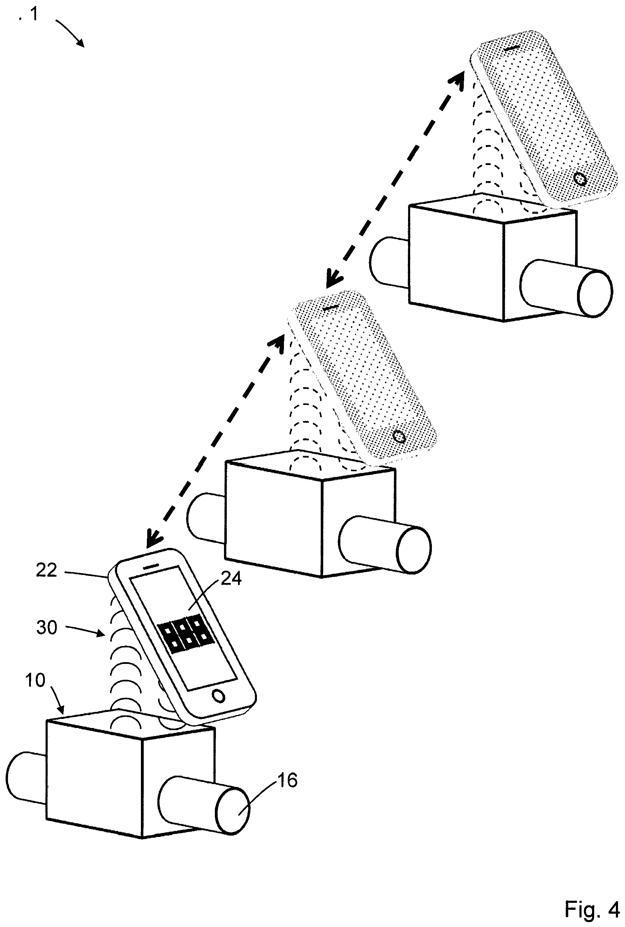

Eine schematische Darstellung einer Mehrfachinstallationssituation von Verbrauchszählern 10 ist in Fig. 4 gezeigt. Es sind drei baugleiche Verbrauchszähler 10 gezeigt, welche mit den Anschlüssen 16 in einem Versorgungsnetz installiert sind. Der erste Verbrauchszähler 10, links unten abgebildet, steht mit einem externen Empfänger per Funk 30 in Verbindung. Der externe Empfänger ist ein Smartphone 22, dessen Display 24 beispielsweise zum Ablesen des Zählerstandes verwendet wird. Dieses Smartphone 22 kann anschließend in die Funkreichweite des zweiten, in der Mitte abgebildeten Verbrauchszählers 10 gebracht werden und mit diesem eine Funkverbindung 30 herstellen. Hier fungiert das Display 24 des Smartphones 22 in gleicher Weise als Anzeige- bzw. Ableseeinrichtung für diesen Verbrauchszähler 10. Weiter kann dieses Smartphone 22 auch bei einem dritten, rechts oben abgebildeten Verbrauchszähler 10 verwendet werden, so dass auch hier eine Funkverbindung 30 hergestellt wird und mittels des Displays 24 des Smartphones 22 der aktuelle Zählerstand des dritten Verbrauchszählers abgelesen werden kann.

In dieser Ausgestaltung umfassen die Verbrauchszähler 10 den Messwertgeber 11 zur Erfassung der Verbrauchsdaten, zum Betrieb des Messwertgebers 11 notwendige weitere Komponenten und die Kommunikationseinrichtung 14. Sofern es sich bei dem Verbrauchszähler 10 um einen Ultraschallwasserzähler handelt, kann hierbei nur noch die Ultraschallmessstrecke mit der zum Betrieb notwendigen Elektronik in das Versorgungsnetz installiert werden. Weitere Elektronikkomponenten, welche in gattungsgemäßen Verbrauchszählern normalerweise vorhanden sind, können ausgelagert werden, wie beispielsweise die Ablese- bzw. Anzeigeeinrichtung und/oder der Speicher 12 und/oder sogar die Messsignalauswertung.

Unter Bezugnahme auf Fig. 4 soll ferner die Möglichkeit zum Ablesen des Zählerstandes durch Auflegen eines externen Empfängers beschrieben werden. Zum Auslesen des Zählerstandes wird das Smartphone 22 bis auf wenige Zentimeter an den Verbrauchszähler 10 gehalten bzw. auf den Verbrauchszähler 10 aufgelegt. Der Verbrauchszähler 10 detektiert dabei das Smartphone 22, welches sich in wenigen Zentimetern Entfernung vom Verbrauchszähler 10 befindet bzw. auf diesem aufliegt. Nach der Detektion des Smartphones 22 übermittelt der Verbrauchszähler 10 seine individuelle ID sowie seinen aktuellen Zählerstand an das Smartphone 22. Anstatt des Smartphones 22 könnte auch ein Tablet-PC 23 oder ein anderer externer Empfänger verwendet werden. Für diese Möglichkeit der Detektion und Übermittlung von Daten bietet sich die Nahfeldkommunikation-Technik, z. B. NFC, an.

Alternativ zu der eingangs beschriebenen Funkübertragung durch Auflegen oder In-Position-Bringen bis auf wenige Zentimeter kann auch eine Nahfeldkommunikation-Technik mit einer maximalen Reichweite von bis zu 10 Meter (z. B. BLE), vorzugsweise bis zu 5 Meter, vorzugsweise bis zu 1 Meter, vorzugsweise bis zu 50 Zentimeter zum Einsatz kommen. Die Kopplung und Authentifizierung zwischen externem Empfänger und Verbrauchszähler 10 kann allein über die Funkverbindung erfolgen. In einer alternativen Ausgestaltung ist eine Kopplung und Einrichtung der Funkverbindung durch ein Auflegen des externen Empfängers, beispielsweise eines Smartphones 22, auf den Verbrauchszähler 10 möglich. Hier wird die Geräteregistrierung über eine erste Nahfeldkommunikation-Technik, beispielsweise durch eine NFC-Verbindung, durchgeführt, wobei die anschließende Funkübertragung selbst über eine zweite Nahfeldkommunikation-Technik, beispielsweise über BLE, erfolgt.

Alternativ oder zusätzlich kann auch eine Kommunikationsverbindung vorgesehen sein, bei der die Datenübertragung per Kabel und/oder optisch und/oder akustisch erfolgt.

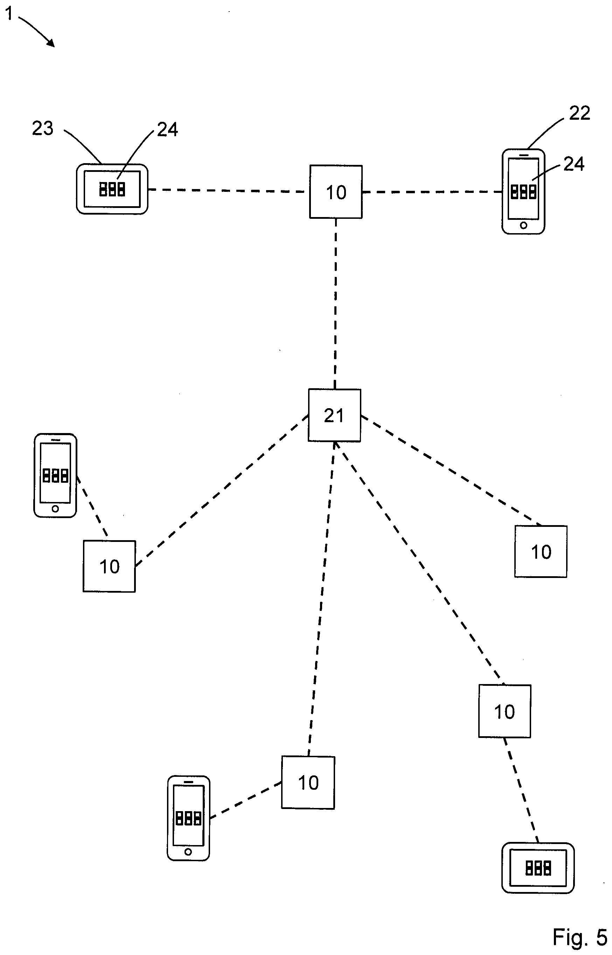

Die Kommunikation einer Mehrzahl von Verbrauchszählern 10 mit einer Mehrzahl von verschiedenen externen Empfängern ist in Fig. 5 gezeigt. Es sind z. B. fünf Verbrauchszähler 10 dargestellt, von denen jeder einzelne mit dem zentralen Mastermodul 21 in Verbindung steht. Zusätzlich stehen die Verbrauchszähler 10 gleichzeitig mit weiteren externen Empfängern in Verbindung, wie z. B. einem Smartphone 22 oder einem Tablet-PC 23. So kommuniziert der in Fig. 5 oben mittig abgebildete Verbrauchszähler 10 mit drei externen Empfängern: dem Mastermodul 21, einem Smartphone 22 sowie einem Tablet-PC 23. Das Mastermodul 21 ist beispielsweise ein Datensammler eines Energieversorgers, welcher als externer Speicher fungiert und in dem der zeitliche Verlauf der Verbrauchsdaten speicherbar ist. Das Smartphone 22 und/oder Tablet-PC 23 hingegen dienen dem Hausbesitzer bzw. Mieter bei Bedarf als externes Display 24 zum Ablesen des aktuellen Zählerstandes oder des Verbrauchsverhaltens. Es werden damit unterschiedliche von den Verbrauchszählern 10 gemeinsam nutzbare Funktionen von verschiedenen externen Empfängern gleichzeitig übernommen.

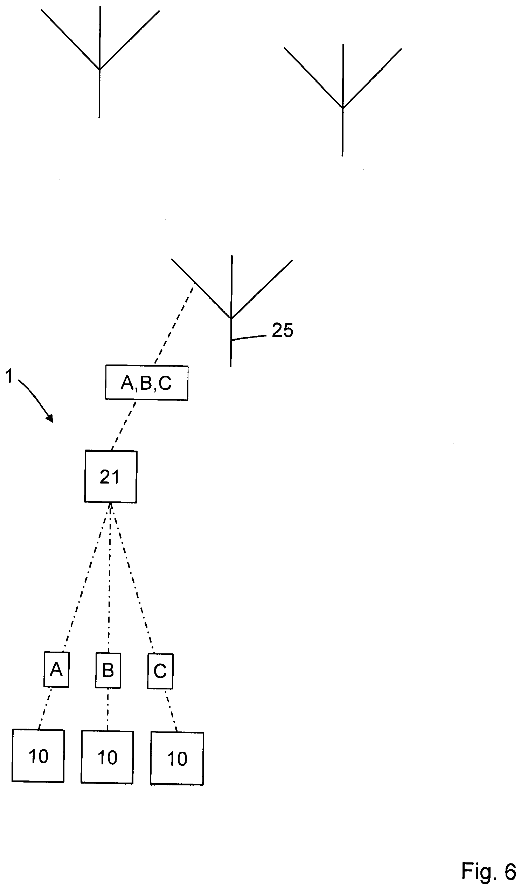

In Fig. 6 ist die Bündelung und Übertragung von Zählerdaten einer Mehrzahl von Verbrauchszählern 10 in einem "fixed network" dargestellt. Beispielhaft sind drei Empfangsantennen 25 des "fixed network" gezeigt. Der externe Empfänger ist hier beispielsweise ein Mastermodul 21. Der externe Empfänger könnte auch ein Smartphone, Tablet-PC oder dergleichen sein. Dieses Mastermodul 21 hat eine Funkverbindung zu einer Empfangsantenne 25 sowie zu drei Verbrauchszählern 10. Die Zählerdaten (A bzw. B bzw. C) der einzelnen Verbrauchszähler 10 werden dabei vom Mastermodul 21 gebündelt und zur Übertragung bereitgehalten. Die bereitgehaltenen Zählerdaten der Verbrauchszähler 10 können anschließend gebündelt (A,B,C) an eine Empfangsantenne 25 des "fixed network" übertragen werden.

### BEZUGSZEICHENLISTE

- 1: Anordnung

- 10: Verbrauchszähler
- 11: Messwertgeber
- 12: Speicher
- 13: Recheneinheit
- 14: Kommunikationseinrichtung
- 15: Funk-Chip
- 16: Anschluss

- 20: Anzeigevorrichtung
- 21: Mastermodul
- 22: Smartphone
- 23: Tablet-PC
- 24: Display
- 25: Empfangsantenne

- 30: Funkverbindung

## Patentansprüche

1. Anordnung (1) umfassend
mindestens einen Verbrauchszähler (10), insbesondere einen Durchflusszähler für flüssiges oder gasförmiges Medium, sowie
einen externen Empfänger,
wobei der Verbrauchszähler (10)
ein Gehäuse,
einen Messwertgeber (11),
eine Recheneinheit (13) sowie
eine Kommunikationseinrichtung (14) zur Übertragung von Zählerdaten an den externen Empfänger umfasst,
**dadurch gekennzeichnet, dass**
die Anordnung (1) mindestens eine Funktionseinheit umfasst, die am externen Empfänger angeordnet ist und es sich bei
der Funktionseinheit um eine durch den Verbrauchszähler (10) und den externen Empfänger gemeinsam nutzbare Funktionseinheit handelt, derart, dass die Funktionalität des Verbrauchszählers (10) erst durch die Funktionseinheit komplettiert ist.

2. Anordnung (1) nach Anspruch 1, **dadurch gekennzeichnet, dass** es sich bei der Funktionseinheit um ein Display (24) und/oder um einen Speicher (12) handelt, in welchem insbesondere Verbrauchsdaten speicherbar sind.

3. Anordnung (1) nach einem der vorhergehenden Ansprüche, **dadurch gekennzeichnet, dass** die gemeinsam nutzbare Funktionseinheit ausschließlich am externen Empfänger vorgesehen ist.

4. Anordnung (1) nach einem der vorhergehenden Ansprüche, **dadurch gekennzeichnet, dass** der externe Empfänger ein Gehäuse, eine Recheneinheit sowie eine Kommunikationseinrichtung umfasst, wobei insbesondere vorgesehen ist, dass der Verbrauchszähler (10) und der externe Empfänger baulich getrennte Einheiten sind.

5. Anordnung (1) nach einem der vorhergehenden Ansprüche, **dadurch gekennzeichnet, dass** die Kommunikationseinrichtung (14) mit dem externen Empfänger per Kabel und/oder per Funk (30) und/oder optisch und/oder akustisch in Verbindung steht.

6. Anordnung (1) nach einem der vorhergehenden Ansprüche, **dadurch gekennzeichnet, dass** die Kommunikationseinrichtung (14) über Nahfeldkommunikation-Technik verfügt, wobei die maximale Reichweite der Nahfeldkommunikation-Technik bevorzugt bis zu 10 Meter, vorzugsweise bis zu 5 Meter, besonders vorzugsweise bis zu 1 Meter, insbesondere bis zu 50 Zentimeter beträgt.

7. Anordnung (1) nach einem der vorhergehenden Ansprüche, **dadurch gekennzeichnet, dass** der externe Empfänger ein Smartphone (22) und/oder ein Tablet-PC (23) ist.

8. Anordnung (1) nach einem der vorhergehenden Ansprüche, **dadurch gekennzeichnet, dass** von der Kommunikationseinrichtung (14) das Auflegen eines externen Empfängers auf den Verbrauchszähler (10) detektierbar ist.

9. Anordnung (1) nach einem der vorhergehenden Ansprüche, **dadurch gekennzeichnet, dass** bei aufliegendem externen Empfänger Daten, insbesondere der Zählerstand und/oder Verbrauchsdaten, übermittelbar sind.

10. Anordnung (1) nach einem der vorhergehenden Ansprüche, **dadurch gekennzeichnet, dass** die Anordnung (1) eine Mehrzahl von Verbrauchszählern (10) umfasst, wobei die Verbrauchszähler (10) vorzugsweise eine eigene individuelle ID haben.

11. Anordnung (1) nach einem der vorhergehenden Ansprüche, **dadurch gekennzeichnet, dass** die Anordnung (1) eine Mehrzahl von externen Empfängern umfasst.

12. Anordnung (1) nach einem der vorhergehenden Ansprüche, **dadurch gekennzeichnet, dass** sie eine Mehrzahl von Verbrauchszählern (10) umfasst, welche eine Mehrfachinstallation insbesondere an einem Ort festlegen, und der externe Empfänger ein Mastermodul (21) für die Installationsanordnung der Mehrzahl von Verbrauchszählern (10) ist.

13. Anordnung (1) nach einem der vorhergehenden Ansprüche, **dadurch gekennzeichnet, dass** die Zählerdaten, vorzugsweise die Zählerdaten einer Mehrzahl von Verbrauchszählern (10), durch den externen Empfänger gebündelt zur Übertragung bereitgehalten werden.

14. Verfahren zum Auslesen mindestens eines Verbrauchszählers (10), vorzugsweise einer Mehrzahl von Verbrauchszählern (10), unter Verwendung einer Anordnung (1) nach einem der vorhergehenden Ansprüche, **dadurch gekennzeichnet, dass** die Zählerdaten vom externen Empfänger zur Weiterübertragung an einen Empfänger, vorzugsweise gebündelt, bereitgehalten werden.

15. Verfahren nach Anspruch 14, **dadurch gekennzeichnet, dass** es sich bei dem Empfänger um eine Empfangsantenne (25) eines "fixed network" handelt.
